# EUROPÄISCHE PATENTSCHRIFT

(11) **EP 0 824 736 B1**
(45) Veröffentlichungstag und Bekanntmachung des Hinweises auf die Patenterteilung: **08.03.2000**
(21) Anmeldenummer: 96919740.9
(22) Anmeldetag: 09.05.1996
(51) Int. Cl.: G07D 7/00

(54) **VORRICHTUNG UND VERFAHREN ZUR PRÜFUNG VON BLATTGUT, WIE Z.B. BANKNOTEN ODER WERTPAPIERE**
DEVICE AND PROCESS FOR CHECKING SHEET ARTICLES SUCH AS BANK NOTES OR SECURITIES
DISPOSITIF ET PROCEDE POUR LE CONTROLE D'OBJETS SOUS FORME DE FEUILLES TELS QUE DES BILLETS DE BANQUE OU DES TITRES

(30) Priorität: 11.05.1995 DE 19517194
(43) Veröffentlichungstag der Anmeldung: 25.02.1998
(73) Patentinhaber: Giesecke & Devrient GmbH, 81677 München (DE)
(72) Erfinder: HOLL, Norbert, Dr., D-71069 Sindelfingen (DE); HOLZNER, Florian, D-82234 Wessling (DE); HORNUNG, Heinz-Ph., D-82205 Gilching (DE); WUNDERER, Bernd, Dr., D-80805 München (DE)
(74) Vertreter: Klunker . Schmitt-Nilson . Hirsch
(86) Internationale Anmeldenummer: EP9601966
(87) Internationale Veröffentlichungsnummer: WO9636021

(56) Entgegenhaltungen:
- EP-A- 0 537 513
- WO-A-91/03031
- DE-A- 4 438 746
- US-A- 4 542 829
- US-A- 4 710 963

## Beschreibung

Die Erfindung betrifft eine Vorrichtung und ein Verfahren zur Prüfung von Blattgut, wie z. B. Banknoten oder Wertpapiere.

Die EP-OS 0 537 513 zeigt eine solche Vorrichtung, bei der die Echtheit von Banknoten geprüft wird. Zu diesem Zweck wird die Banknote zunächst mit Leuchtdioden in den Farben rot und grün sowie im infraroten Spektralbereich beleuchtet. Die Leuchtdioden werden sequentiell gepulst, so daß die Banknote jeweils nur mit einer Farbe bzw. im infraroten Spektralbereich beleuchtet wird. Die Dioden sind auf beiden Seiten der Banknote angeordnet. Das von der Banknote transmittierte bzw. reflektierte Licht wird mittels eines einzigen linearen CCD-Arrays detektiert und in elektrische Signale umgewandelt, die dann entsprechend weiterverarbeitet werden.

Durch die Verwendung eines linearen CCD-Arrays läßt sich eine relativ hohe örtliche Auflösung auf der Banknote erzielen. Nachteilig ist jedoch der hohe apparative Aufwand, der zur Beleuchtung der Banknote in verschiedenen Farben bzw. im infraroten Spektralbereich notwendig ist. Ein spezielles Problem stellt der Abgleich der Beleuchtungsstärken in den unterschiedlichen Farben bzw. im infraroten Spektralbereich gegeneinander dar.

Die DE-OS 38 15 375 zeigt eine weitere Vorrichtung zur Prüfung der Echtheit von Blattgut. Sie ist aus mehreren gleichen Modulen aufgebaut. Jedes Modul weist eine eigene Beleuchtungseinrichtung mit weißem Licht und ein lineares Fotodioden-Array auf. Weiterhin ist vor jedem Modul ein Filter angebracht, der beispielsweise die Farben rot, grün oder blau bzw. im infraroten Spektralbereich transmittiert.

Zur Prüfung des Blattguts tritt das von der Beleuchtung emittierte Licht durch den Filter des entsprechenden Moduls und beleuchtet das Blattgut. Das vom Blattgut remittierte Licht tritt dann wiederum durch den Filter des Moduls und wird von dem linearen Fotodioden-Array detektiert. Dieses setzt das auftreffende Licht in entsprechende Signale um, die dann weiterverarbeitet werden.

Durch die Verwendung gleicher Module für die einzelnen Farben bzw. den infraroten Spektralbereich kann einerseits eine hohe Reparaturfreundlichkeit der Vorrichtung gewährleistet werden. Andererseits wird jedoch ein relativ hoher apparativer Aufwand benötigt. Durch die Verwendung eines Fotodi-oden-Arrays wird das Blattgut nahezu in seiner gesamten Breite abgetastet. Die erzielten Auflösungen sind jedoch vergleichsweise gering.

Die DE-A-44 38 746 zeigt eine Vorrichtung, bei der ein ortsfestes Blattgut mit einer Beleuchtungseinrichtung beleuchtet wird und das vom Blattgut remittierte Licht mit einer Empfangseinrichtung empfangen und in entsprechende elektrische Signale umgesetzt wird. Die Signale werden in einer Auswerteeinrichtung verarbeitet. Die Empfangseinrichtung weist hierbei einen Farbsensor zum Lesen von sichtbaren Strahlen und einen Sensor zum Lesen von Infrarotstrahlen auf, so daß gleichzeitig infrarote und sichtbare Bilddaten erzeugt werden können.

Nachteil dieser Vorrichtung ist es, daß mit ihr lediglich ortsfestes Blattgut detektiert werden kann. Weiterhin wird durch die Verwendung eines Farbsensors und eines Sensors zum Lesen von Infrarotstrahlen auch bei dieser Vorrichtung ein relativ hoher apparativer Aufwand benötigt.

Ausgehend davon liegt der Erfindung die Aufgabe zugrunde, eine Vorrichtung und ein Verfahren zur Prüfung von Blattgut vorzuschlagen, die das Blattgut mit hoher Auflösung und in mehreren Spektralbereichen prüft und einen vergleichsweise geringen apparativen Aufwand benötigt.

Diese Aufgabe wird durch die Merkmale der unabhängigen Ansprüche 1 und 22 gelöst.

Der Grundgedanke der Erfindung besteht im wesentlichen darin, daß die Vorrichtung eine Beleuchtungseinrichtung aufweist, die das. Blattgut stetig und im gesamten zu untersuchenden Spektralbereich beleuchtet. Zur Detektion des vom Blattgut remittierten zw. transmittierten Lichts wird eine Empfangseinrichtung verwendet, die wenigstens zwei linienförmige parallel zueinander angeordnete CCD-Arrays aufweist. Auf jedem CCD-Array wird ein für einen bestimmten Spektralbereich durchlässiger Filter aufgebracht. Die einzelnen Filter werden hierbei so gewählt, daß mindestens einer im sichtbaren und einer im nichtsichtbaren Spektralbereich transmittiert. Die einzelnen CCD-Array erzeugen aus dem empfangenen Licht elektrische Signale, die dann in einer Auswerteeinrichtung verarbeitet und zur Prüfung des Blattguts mit Referenzdaten verglichen werden.

Vorteil der Erfindung ist es, daß sowohl die Beleuchtungseinrichtung als auch die Empfangseinrichtung einen geringen apparativen Aufwand benötigen. Die einzelnen CCD-Arrays sowie die entsprechenden Filter sind kompakt auf einem Träger angeordnet und können relativ kostengünstig hergestellt werden. Durch die Verwendung mehrerer CCD-Arrays können gleichzeitig mehrere verschiedene Spektralbereiche mit hoher Auflösung und über die gesamte Breite des Blattguts detektiert werden.

In einer bevorzugten Ausführungsform weist die Empfangseinrichtung vier parallele CCD-Arrays mit Filtern auf, wobei die Filter jeweils einen Spektralbereich im Farbbereich rot, grün, blau sowie im infraroten Spektralbereich transmittieren.

Bei der Prüfung des Blattgutes kann nun beispielsweise mittels der Farbbereiche rot, grün und blau das sichtbare Druckbild des Blattguts geprüft werden. Gleichzeitig können die im infraroten Spektralbereich detektierten Signale zur Bestimmung des Verschmutzungsgrads des Blattguts benutzt werden.

Vorzugsweise wird eine Beleuchtungseinrichtung vorgesehen, die das Blattgut in einem zweidimensionalen Beleuchtungsbereich gleichmäßig ausleuchtet. Hierdurch kann ein apparativer Aufwand zur Korrektur unterschiedlicher Beleuchtungsstärken auf den einzelnen Bildelementen der CCD-Arrays gering gehalten werden.

Weitere Merkmale der Erfindung ergeben sich aus den nebengeordneten Ansprüchen und den Unteransprüchen. Nachfolgend werden einige Ausführungsbeispiele der Erfindung anhand der Figuren beschrieben. Es zeigen:
- Fig. 1: Vorderansicht einer ersten Ausführungsform der Erfindung,
- Fig. 2: Seitenansicht der ersten Ausführungsform der Erfindung,
- Fig. 3: Aufsicht der ersten Ausführungsform der Erfindung,
- Fig. 4: Prinzipskizze einer bevorzugten Ausführungsform der Empfangseinrichtung,
- Fig. 5: Prinzipskizze einer gleichmäßigen Beleuchtungseinrichtung in Transportrichtung,
- Fig. 6: Prinzipskizze der gleichmäßigen Beleuchtungseinrichtung senkrecht zur Transportrichtung,
- Fig. 7: Prinzipskizze einer Auswerteeinrichtung,
- Fig. 8: Blattgut mit Druckbild im sichtbaren Spektralbereich,
- Fig. 9: Blattgut mit Druckbild im nichtsichtbaren Spektralbereich,
- Fig. 10: Blattgut mit Flecken und Einrissen im sichtbaren Spektralbereich,
- Fig. 11: Blattgut mit Freiflächen im nichtsichtbaren Spektralbereich.

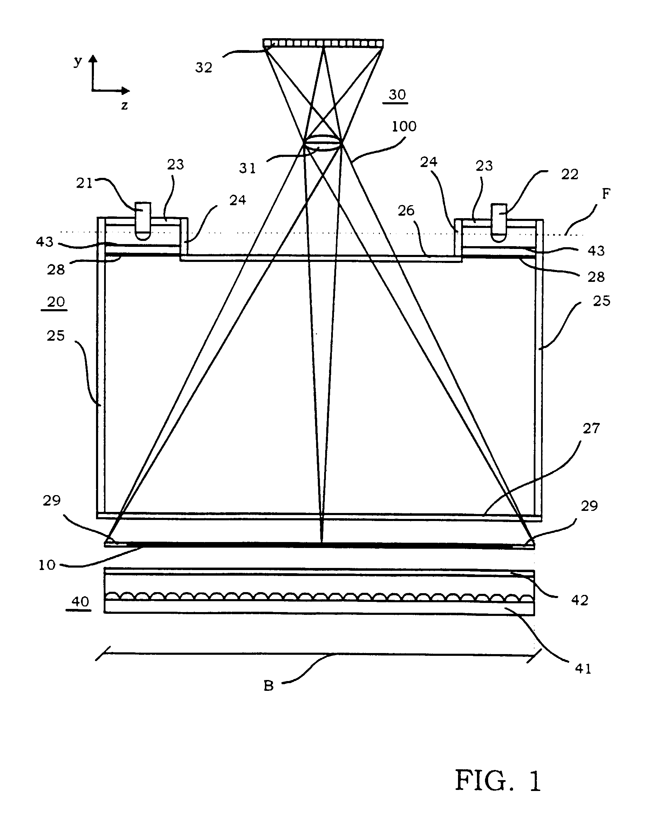

Fig. 1 zeigt eine Vorderansicht einer ersten Ausführungsform der Erfindung. Das Blattgut 10 wird stetig und im gesamten zu untersuchenden Spektralbereich mittels einer Beleuchtungseinrichtung 20 in einem Beleuchtungsbereich beleuchtet. Das vom Blattgut 10 kommende Licht 100 wird dann mittels einer Empfangseinrichtung 30 detektiert. Bevorzugt werden die Beleuchtungseinrichtung 20 und die Empfangseinrichtung 30 in einer Achse senkrecht zum Blattgut 10 angeordnet. Die Beleuchtungseinrichtung 20 ist so ausgeführt, daß das vom Blattgut kommende Licht 100 durch die Beleuchtungseinrichtung 20 treten kann bevor es mittels der Empfangseinrichtung 30 detektiert wird.

Optional kann die Beleuchtungseinrichtung 20 eine Gegenbeleuchtung 40 aufweisen, die das Blattgut 10 von der der Empfangseinrichtung 30 abgewandten Seite beleuchtet. Das von der Gegenbeleuchtung 40 emittierte Licht wird vom Blattgut 10 transmittiert und dann von der Empfangseinrichtung 30 detektiert.

Die Empfangseinrichtung 30 besteht im wesentlichen aus einer optischen Einheit 31, die den Beleuchtungsbereich auf dem Blattgut 10 zumindest teilweise auf einen lichtempfindlichen Sensor 32 abbildet.

Der Sensor 32 weist wenigstens zwei linienförmige parallel zueinander angeordnete CCD-Arrays auf, wobei auf jedem CCD-Array ein Filter aufgebracht ist. Jeweils mindestens ein Filter transmittiert im sichtbaren und mindestens einer im nichtsichtbaren Spektralbereich.

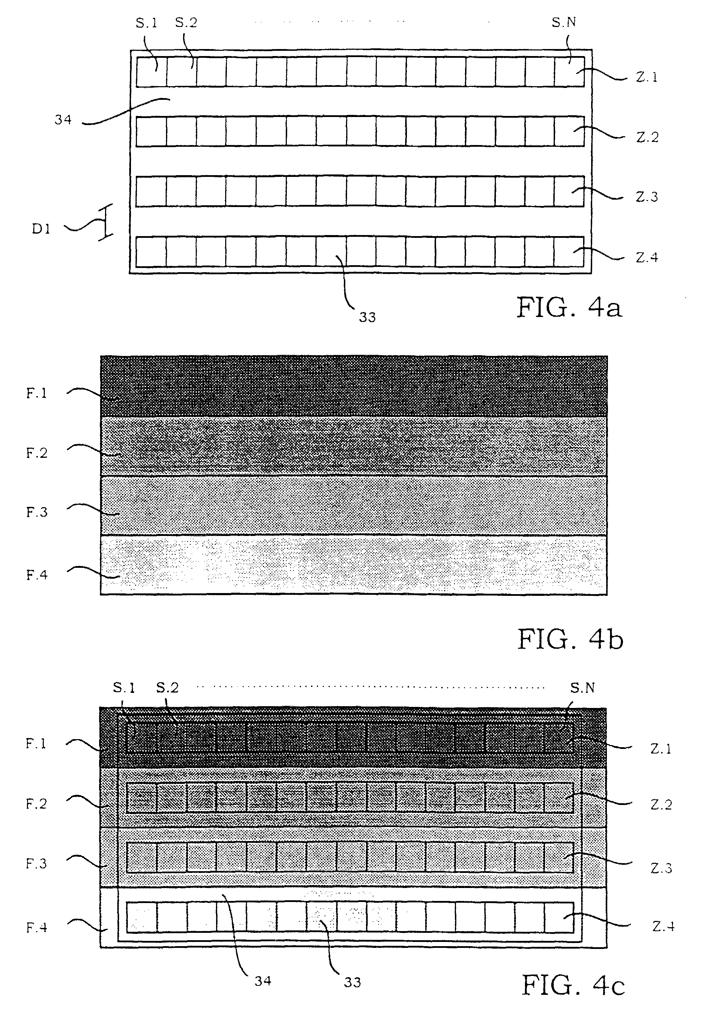

In einer bevorzugten Ausführungsform des Sensors 32 weist dieser, wie in Fig. 4a gezeigt, vier CCD-Arrays Z.1 - Z.4 auf, die auf einem Träger 34 angebracht sind. Jedes CCD-Array besitzt mehrere Bildelemente 33, die in Spalten S.1 - S.N angeordnet sind. Die einzelnen CCD-Arrays Z.1 - Z.4 sind parallel zueinander in einem Abstand D1 angeordnet. Die Fig. 4b zeigt vier lineare Filter F.1 - F.4, wobei mindestens ein Filter im sichtbaren und mindestens ein Filter im nichtsichtbaren Spektralbereich transmittiert. Die Fig. 4c zeigt eine Aufsicht des Sensors 32, der den Träger 34 mit den CCD-Arrays Z.1 - Z.4 und die auf die CCD-Arrays aufgebrachten linearen Filtern F.1 - F.4 aufweist. Jeweils ein CCD-Array wird von einem Filter eines bestimmten Spektralbereichs abgedeckt.

Der Sensor 32 ist kompakt aufgebaut, wobei die Seitenlängen des Trägers 34 maximal wenige Zentimeter betragen. Da der Sensor 32 relativ kostengünstig herzustellen ist, kann er bei einem Defekt in einem der CCD-Arrays Z.1 - Z.4 einfach durch einen neuen Sensor ersetzt werden.

Die Fig. 1 zeigt weiterhin die Beleuchtungseinrichtung 20, die zwei Lichtquellen 21 und 22 aufweist, die stetig Licht in einem bestimmten Spektralbereich emittieren. Vorzugsweise ist dieser bestimmte Spektralbereich gleich dem zu untersuchenden Spektralbereich. Als Lichtquellen 21 bzw. 22 können beispielsweise Glühlampen benutzt werden.

Durch die Abstrahlcharakteristik der Lichtquellen 21 und 22 wird der Beleuchtungsbereich des Blattguts 10 sowohl in Transportrichtung als auch senkrecht zur Transportrichtung ungleichmäßig beleuchtet. Dieser Effekt wirkt sich auf das vom Blattgut 10 remittierte Licht 100 und somit auch auf die vom Sensor 32 detektierten Beleuchtungsstärken ungünstig aus und kann nach der Detektion durch den Sensor 32 kaum noch kompensiert werden.

Zur Vermeidung dieses Effekts ist es günstig, den Beleuchtungsbereich des Blattguts 10 weitestgehend gleichmäßig zu beleuchten. Hierzu wird bevorzugt ein Reflektor vorgesehen, der ein zylindrisches Spiegelsegment 23 und mehrere Spiegel 24, 25 aufweist und das von den Lichtquellen 21 und 22 emittierte Licht so reflektiert, daß das Blattgut in einem Beleuchtungsbereich der Breite B senkrecht zur Transportrichtung und der Länge L in Transportrichtung gleichmäßig beleuchtet wird.

Das Spiegelsegment 23 weist die Breite B und eine Fokuslinie F in Richtung der Breite B auf. Die Lichtquellen 21 und 22 werden in dieser Fokuslinie F des Spiegelsegments 23 angebracht. Die Form der Grundlinie des Spiegelelements 23 ist so gewählt, daß das von den Lichtquellen 21 und 22 emittierte Licht einen Beleuchtungsbereich der Breite B und der Länge L gleichmäßig beleuchtet.

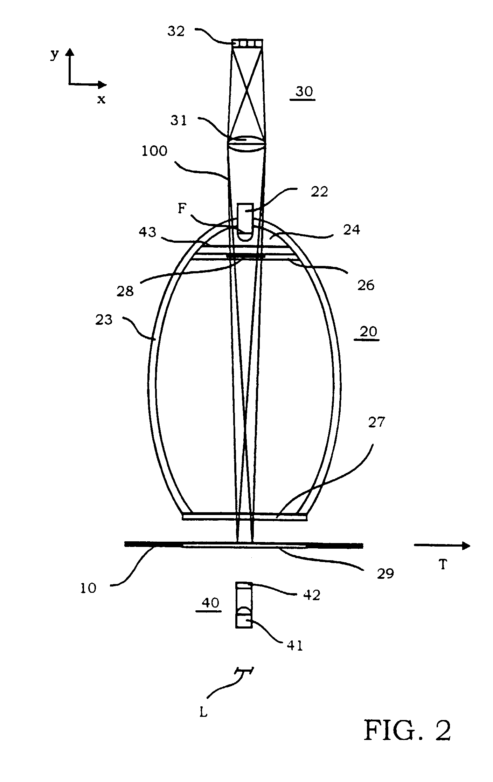

Die Form der Grundlinie des Spiegelsegments 23 ist in Fig. 2 gezeigt und ähnelt einer Ellipse. Im Gegensatz zu einem elliptischen Spiegel weist das Spiegelelement 23 jedoch nur eine Fokuslinie F auf. Die zweite Fokuslinie eines elliptischen Spiegelsegments wird durch die Form des Spiegelsegments 23 so verändert, daß in der Ebene des Blattguts der Beleuchtungsbereich auf der Länge der Strecke L gleichmäßig beleuchtet wird.

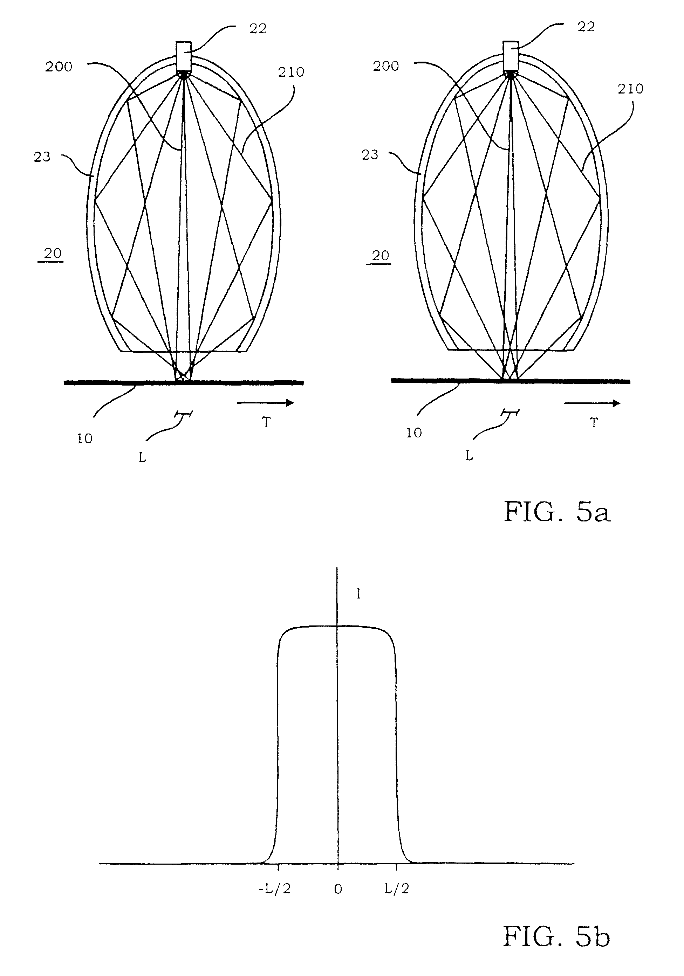

Die Fig. 5a zeigt zwei mögliche Varianten der Form des Spiegelsegments 23. Bei der ersten liegt die Grundlinie des Spiegelsegments 23 innerhalb und bei der zweiten Variante außerhalb einer gedachten Ellipse. Die gedachte Ellipse ist hier nicht dargestellt, da die Abweichungen bei der hier gewählten Darstellung so gering sind, daß sie der Betrachter nicht mehr auflösen kann. Das auf das Blattgut 10 auftreffende Licht setzt sich aus einem direkten Lichtanteil 200 und einem reflektierten Lichtanteil 210 zusammen. Durch die Abweichung von der elliptischen Form entsteht in beiden Varianten eine Beleuchtungsstärke, die, wie in Fig. 4b dargetellt, den Beleuchtungsbereich in seiner Länge L weitestgehend gleichmäßig beleuchtet.

Weiterhin weist der in Fig. 1 dargestellte Reflektor zwei ebene innere Spiegel 24 innerhalb des Spiegelsegments 23 und zwei äußere ebene Spiegel 25 an den Enden des Spiegelsegments 23 auf. Die Spiegel 24, 25 sind senkrecht zur Fokuslinie F des Spiegelsegments 23 angeordnet und jeweils die Spiegelfläche eines inneren Spiegels 24 und eines äußeren Spiegels 25 weisen auf eine der Lichtquellen 21 bzw. 22.

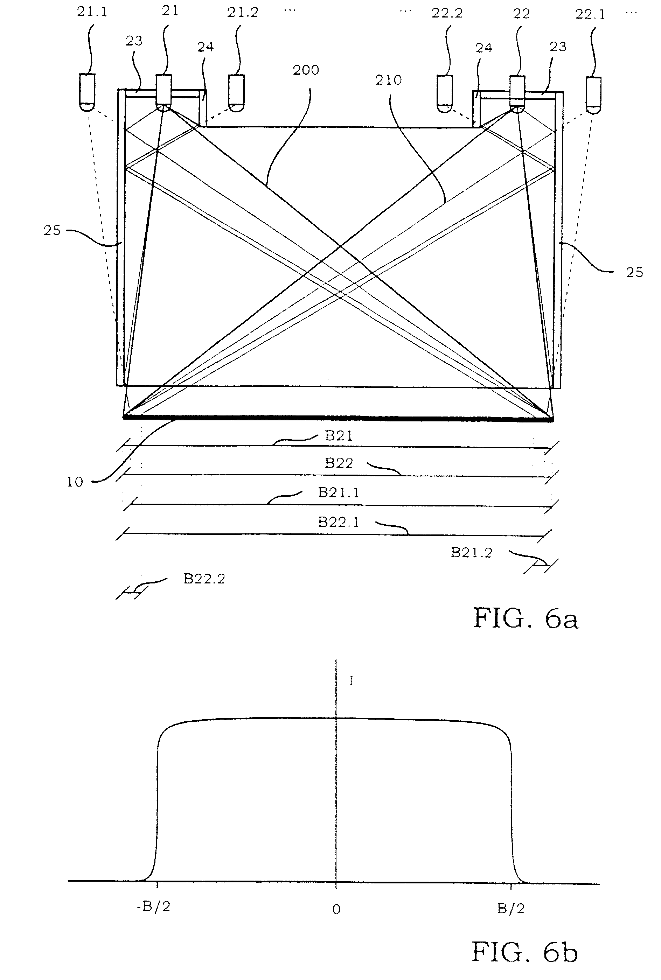

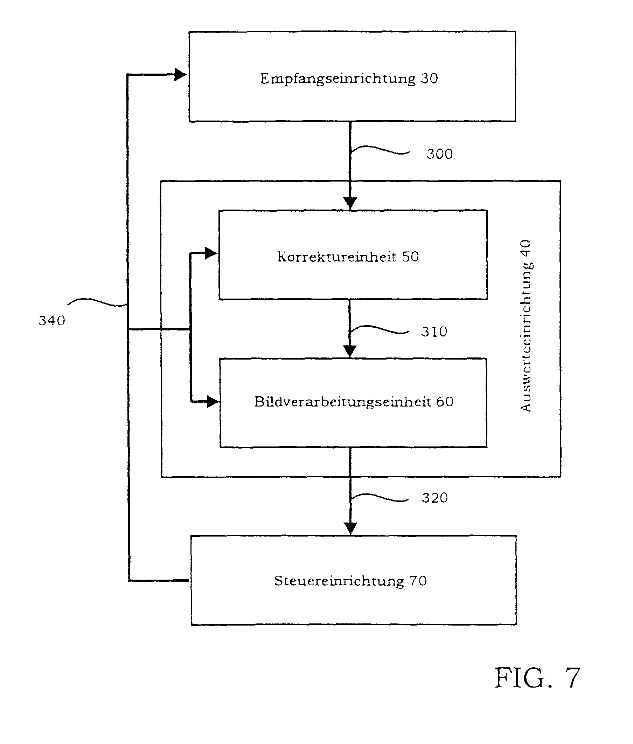

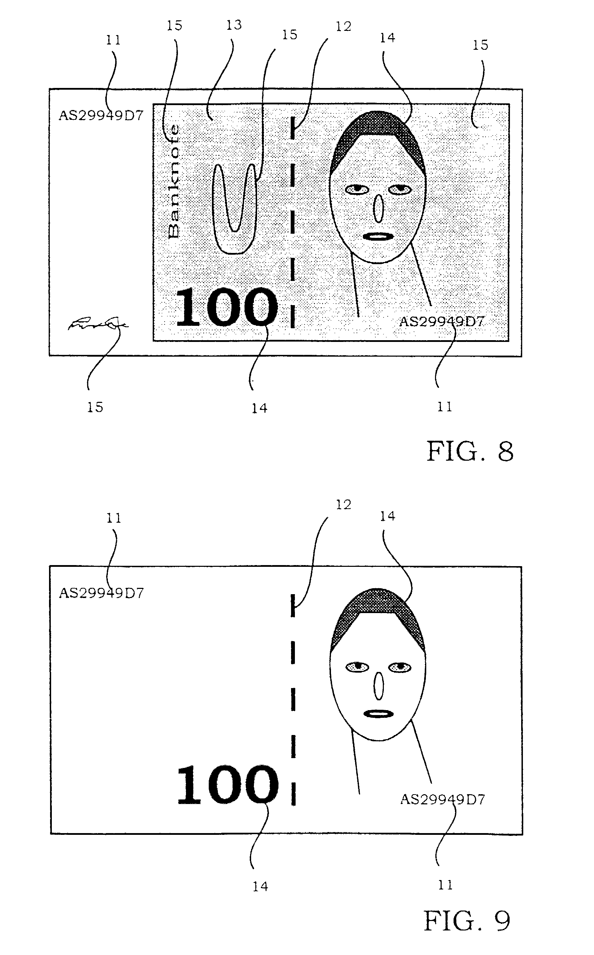

In Fig. 6a ist die Auswirkung der Spiegel 24 und 25 auf das von den Lichtquellen 21 und 22 emittierte Licht dargestellt. Da jede Lichtquelle 21 bzw. 22 zwischen zwei Spiegeln 24 und 25 angeordnet ist, entstehen durch Mehrfachreflektion des von der Lichtquelle 21 bzw. 22 emittierten Lichts quasi unendlich viele virtuelle Lichtquellen 21.1, 21.2, usw. und 22.1, 22.2, usw. Das den Beleuchtungsbereich in Richtung der Breite beleuchtende Licht ist somit aus einem direkten Lichtanteil im Bereich B21 und B22 und den Lichtanteilen der virtuellen Lichtquellen B21.1, B21.2, usw. und B22.1, B22.2, usw. zusammengesetzt. Durch diesen Effekt ergibt sich, wie in Fig. 5b dargestellt, auch in Richtung der Breite des Beleuchtungsbereichs eine weitestgehend gleichmäßige Beleuchtungsstärke.

Durch die spezielle Gestaltung des Reflektors aus dem Spiegelsegment 23, den inneren Spiegeln 24 und den äußeren Spiegeln 25 wird das von den Lichtquellen 21 und 22 emittierte Licht so verändert, daß der Beleuchtungsbereich sowohl in der Breite B als auch in der Länge L gleichmäßig beleuchtet wird. Bevorzugt wird die Breite B mindestens so breit wie das Blattgut gewählt, so daß das Blattgut 10 in der gesamten Breite abgetastet werden kann. Der gleichmäßige Beleuchtungsbereich wird nun mittels der optischen Einrichtung 31 auf den Sensor 32 abgebildet, so daß dieser bei einem gleichmäßig reflektierenden Hintergrund auch gleichmäßig beleuchtet würde. Korrekturen aufgrund ungleichmäßiger Beleuchtung können somit weitestgehend vermieden werden.

Um den Reflektor gegen Schmutz oder Feuchtigkeit zu schützen, kann dieser optional mittels eines oberen Fensters 26 und eines unteren Fensters 27 geschlossen werden.

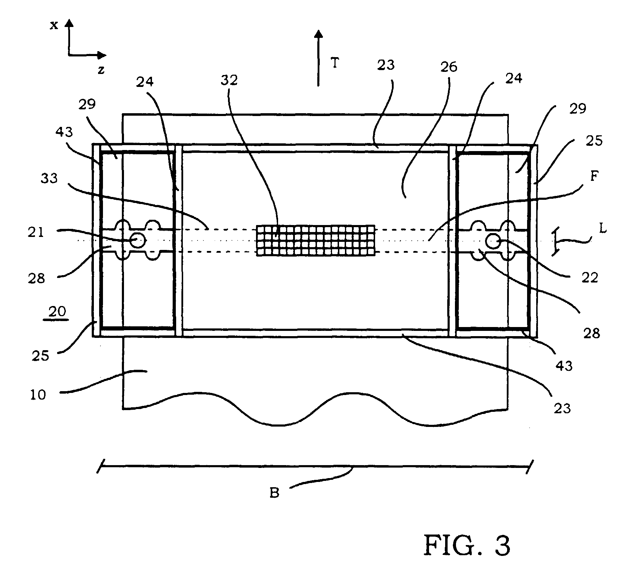

Um eine Reflektion von Lichtanteilen von den Fenstern 26, 27 in die Empfangseinrichtung 30 zu verhindern, können die entsprechenden Fensterflächen der Fenster 26 und 27 entspiegelt werden. Weiterhin können im Reflektor Blenden 28 vorgesehen werden, deren Form so gewählt wird, daß die störenden Lichtanteile umgelenkt werden. Eine mögliche Form der Blenden 28 ist in Fig. 3 zu erkennen. Sie hängt jedoch stark von der Anordnung und der Form der Spiegel 23, 24 und 25 bzw. der Fenster 26 und 27 und der Lichtquellen 21 und 22 ab.

Für spezielle Anwendungen kann eines der Fenster 26 oder 27 oder beide Fenster als Filter für einen bestimmten Spektralbereich ausgebildet werden.

In Fig. 1 ist weiterhin eine Gegenbeleuchtung 40 als Komponente der Beleuchtungseinrichtung 20 gezeigt. Die genbeleuchtung 40 weist ein LED-Array 41 als Lichtquelle auf und beleuchtet das Blattgut 10 von der der Empfangseinheit 30 abgewandten Seite. Optional kann die Gegenbeleuchtung 40 mit einem Fenster 42 zum Schutz gegen Verschmutzung geschlossen werden. Das Fenster 42 kann bei Bedarf auch als Filter ausgebildet werden, so daß die Gegenbeleuchtung 40 auf einen bestimmten Spektralbereich eingeschränkt wird. Vorzugsweise wird der Spektralbereich z. B. bei einer Verschmutzungsmessung des Blattguts 10 im infraroten Spektralbereich gewählt.

Optional kann im Reflektor ein Filter 43 vorgesehen werden, der verhindert, daß das von den Lichtquellen 21 und 22 im bestimmten Spektralbereich der Gegenbeleuchtung 40 emittierte Licht auf das Blattgut 10 trifft. Auf diese Weise kann eine Remissionsmessung mit einer Transmissonsmessung kombiniert werden. Beispielsweise kann das sichtbare Druckbild des Blattguts 10 in Remission des sichtbaren Lichts und gleichzeitig das Wasserzeichen des Blattguts 10 in Transmisson des infraroten Lichts gemessen werden.

Wird der bestimmte Spektralbereich der Gegenbeleuchtung 40 auch von den Lichtquellen 21 und 22 erzeugt und trifft auf das Blattgut 10, erhält man den vom Fettfleckphotometer bekannten Effekt, daß Änderungen in der Dicke des Blattguts, bespielsweise im Bereich eines Wasserzeichens, nicht detektiert werden können. Dieser Effekt kann bei der Messung der Verschmutzung des Blattguts im Bereich eines Wasserzeichens ausgenutzt werden.

Zur Prüfung des Blattguts 10 wird dieses, wie schon oben beschrieben, mittels der Beleuchtungseinrichtung 20 in einem bestimmten Beleuchtungsbereich gleichmäßig beleuchtet. Dieser Beleuchtungsbereich wird dann zumindest teilweise mittels der optischen Einheit 31 der Empfangseinrichtung 30 auf den Sensor 32 abgebildet. Das dort auftreffende Licht 100 wird mittels der Filter F.1 - F.4 gefiltert und von den CCD-Arrays Z.1 - Z.4 in elektrische Signale umgewandelt. Jedes CCD-Array weist N Bildelemente 33 auf, die in Spalten S.1 - S.N angeordnet sind. Die Anzahl N der Bildelemente wird bevorzugt so groß gewählt, daß die örtliche Auflösung auf dem Blattgut einem Quadrat mit einer Seitenlänge kleiner 0.5 mm entspricht. Geht man von einer maximal benötigten Breite B von 120 mm aus, so sollte die Anzahl N der Bildelemente pro CCD-Array >= 240 sein.

Damit die Bildelemente 33 ein Signal mit genügendem Signal-Rauschverhältnis liefern, müssen sie eine bestimmte Anzahl von Lichtteilchen empfangen und in Photoelektronen wandeln. Bei konstanter Auflösung, konstantem Abstand zwischen dem Blattgut 10 und dem CCD-Array 32, konstanter Belichtungszeit und konstanter Blendenzahl des Objektivs ist die zur Erzeugung einer bestimmten Anzahl von Photoelektronen erforderliche Beleuchtungsstärke des Blattguts 10 annähernd umgekehrt proportional zur sensitiven Fläche des Bildelements 33 auf dem CCD-Array.

Die Beleuchtungsstärke des Blattguts 10 kann hierbei nur bedingt variiert werden, da diese von der maximalen Beleuchtungsstärke der Beleuchtungseinrichtung 20 abhängt. Diese wiederum wird im allgemeinen durch physikalische Effekte, wie z. B. Wärmeentwicklung bei Lichterzeugung und Wärmeabtransport oder ähnlichen, nach oben begrenzt. Die maximale Beleuchtungsstärke durch die Beleuchtungseinrichtung 20 kann somit als konstant angenommen werden.

Die Größe der sensitiven Fläche des Bildelements 33 kann nun in Abhängigkeit von der Belichtungszeit optimiert werden. Die Belichtungszeit hängt im wesentlichen von der gewünschten örtlichen Auflösung auf dem Blattgut 10 in Transportrichtung, hier 0,5 mm, sowie der gewünschten Transportgeschwindigkeit des Blattguts ab. Bei einer gewünschten Transportgeschwindigkeit von 5 m/s ergibt sich die Belichtungszeit zu 0,0005 / 5 = 0,0001 s. Verwendet man als Lichtquellen Glühlampen mit einer Lampenintensität kleiner 20 Watt, so ergibt sich bei einer Beleuchtungszeit von 0,0001 s die optimale Größe der sensitiven Fläche des Bildelements 33 zu ca. 70 x 70 Um. Bei den derzeit gängigen CCD-Arrays liegt diese Größe bei ca. 13 x 13 Um. Die hier verwendeten CCD-Arrays sind um einen Faktor von ca. 25 empfindlicher als die derzeit gängigen CCD-Arrays. Die Größe der sensitiven Fläche kann bei Bedarf auch für andere Transportgeschwindigkeiten oder Auflösungen optimiert werden.

Die elektrischen Signale der einzelnen Bildelemente 33 eines CCD-Arrays werden in der Reihenfolge 1, 2, ... N nacheinander in einem Verstärker verstärkt und dann mit einem A/D-Wandler in digitale Signale umgesetzt. Bei einer Belichtungszeit von 0,0001 s und einer Anzahl N von Bildelementen 33 pro CCD-Array von 240 ergibt sich eine Bearbeitungszeit pro digitalen Datenwert von ca. 0,4 µs. Bei einer höheren örtlichen Auflösung oder einer größeren Transportgeschwindigkeit kann die Bearbeitungszeit auch geringer werden.

Die von der Empfangseinrichtung 30 gelieferten digitalen Daten werden dann über eine Datenleitung 300 zu einer gezeigten Auswerteeinrichtung 40 übertragen. Diese besteht, wie in Fig. 7 gezeigt, aus zwei Komponenten.

Die erste Komponente ist eine Korrektureinheit 50, die die digitalen Daten der einzelnen Bildelemente 33 normiert und die entsprechenden Daten der Bildelemente 33 einer Spalte S.1 - S.N der verschiedenen CCD-Arrays Z.1 - Z.4 zu einem digitalen Datum zusammenfaßt und dieses einem Bereich auf dem Blattgut 10 zuordnet. Die Normierung geschieht mittels additiver und multiplikativer Korrekturgrößen.

Die Korrektureinheit 50 enthält mindestens einen digitalen Datenprozessor zur Ausführung der Korrekturberechnungen in der zur Verfügung stehenden Verarbeitungszeit für ein Bildelement 33 von ca. 0,4 µs. Vorzugsweise wird ein digitaler Datenprozessor für jedes CCD-Array Z.1 - Z.4 vorgesehen.

Durch eine additive Korrektur der von den Bildelementen 33 gelieferten digitalen Werte lassen sich bauartbedingte Unterschiede in der Dunkelempfindlichkeit der einzelnen Bildelemente ausgleichen. Die entsprechende additive Korrekturgröße kann durch eine Dunkelmessung bestimmt werden.

Unterschiede in der gemessenen Intensität bei gleicher Beleuchtungsstärke können zum einen durch unterschiedliche Empfindlichkeit der einzelnen Bildelemente 33 bzw. durch geringe Ungleichmäßigkeiten in der Beleuchtung entstehen. Diese Unterschiede können durch eine Multiplikation der digitalen Daten mit einem entsprechenden Multiplikator ausgeglichen werden. Dieser Multiplikator wird durch Messung einer Weißreferenz (ideal weiße Fläche) bestimmt. Die Weißreferenz kann beispielsweise als weißer Hintergrund hinter dem Blattgut 10 realisiert und in den Lücken zwischen zwei Blättern gemessen werden. Eine andere Möglichkeit besteht darin, von Zeit zu Zeit eine Weißreferenz in Form eines Blattes einzugeben und entsprechend auszumessen.

Weiterhin können sich Änderungen in der Beleuchtungszeit ergeben, die z. B. durch Schwankungen im Steuertakt der Vorrichtung oder durch Schlupf des Blattguts im Transportsystem entstehen können. Um solche Änderungen auszugleichen, werden die digitalen Daten der Bildelemente 33 wiederum mit einem entsprechenden Multiplikator multipliziert. Dieser wird durch Messung von Weißreferenzen 29 bestimmt, die seitlich vom Blattgut 10 angeordnet sind und während der Prüfung des Blattguts 10 kontinuierlich von der Empfangseinrichtung 30 gemessen werden. Die digitalen Werte der Bildelemente 33 des Blattguts 10 werden auf die an der Weißreferenz 29 gemessene Intensität normiert, so daß Einflüsse durch Änderungen der Beleuchtungszeit ausgeschlossen werden.

Vorzugsweise sind die einzelnen CCD-Arrays Z.1 - Z.4 in einem konstanten Abstand D1 parallel zueinander angeordnet, wobei der Abstand D1 ein ganzzahliges Vielfaches der Kantenlänge eines Bildelementes 33 ist. Die Korrektureinheit 50 ist in der Lage, eine bestimmte Anzahl von Bildelementen 33 zu speichern, um den entstehenden zeitlichen Versatz bei der Messung eines Bildelements auf dem Blattgut 10 auszugleichen. Die Korrektureinheit 30 fügt die digitalen Daten der in einer Spalte (z. B. S.1, S.2 usw.) angeordneten Bildelemente 33 der verschiedenen CCD-Arrays Z.1 - Z.4 so zu einem digitalen Datum zusammen, daß dieses die Informationen über die verschiedenen Spektralbereiche eines Bildelements der gewünschten Auflösung auf dem Blattgut 10 enthält. Diese Daten werden dann über eine Datenleitung 310 an die zweite Komponente der Auswerteeinrichtung 40 übergeben. Die Datenleitung 310 ist in der Lage, eine Datenmenge von ca. 170 MBd zu übertragen. Die Datenmenge kann bei Bedarf auch noch gesteigert werden.

Die zweite Komponente der Auswerteeinrichtung 40 ist eine Bildverarbeitungseinheit 60. Sie ist in der Lage, die von der Korrektureinheit 50 übertragenen digitalen Daten zu einem zweidimensionalen Bild zusammenzusetzen und abzuspeichern. Die abgespeicherten Bilddaten können beispielsweise durch Drehen um eine Achse oder Komprimieren verändert werden. Weiterhin kann auch die Farbinformationen der Bilddaten von einem Farbsystem in ein anderes transformiert werden (z. B. RGB in HSI). Zu diesem Zweck können in der Bildauswerteeinheit 60 Tabellen gespeichert werden, die in der einen Spalte den Eingangswert in dem einen Farbsystem und in der anderen Spalte den entsprechenden transformierten Ausgangswert im anderen Farbsystem enthalten. Mittels dieser Tabellen ist eine einfache und schnelle Transformation der Farbinformationen möglich.

Zur Prüfung des Blattguts 10 werden die so veränderten Bilddaten in der Bildauswerteeinheit 60 mit entsprechenden Referenzdaten verglichen. Je nach Güte der Übereinstimmung werden für unterschiedliche Prüfungen Kenndaten ermittelt.

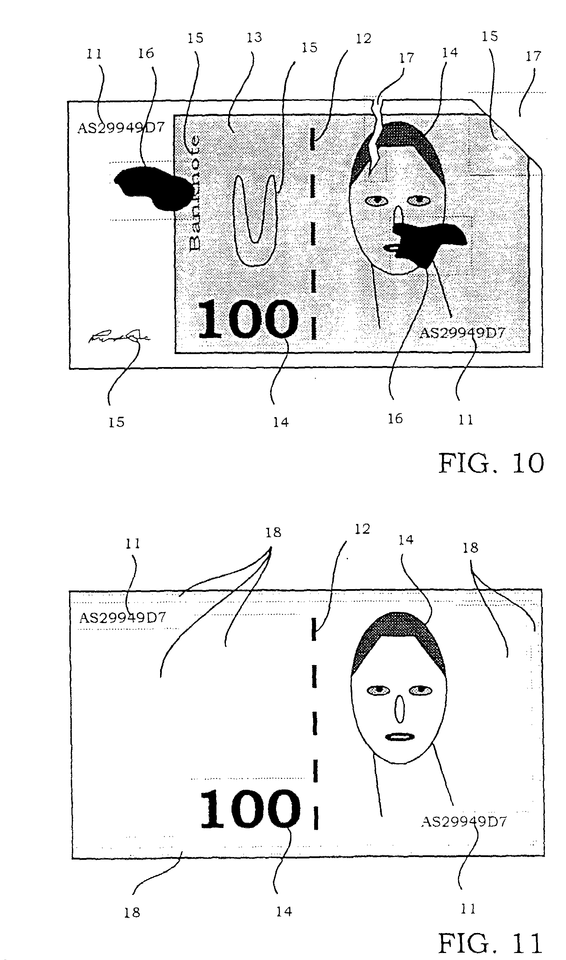

In Fig. 8 ist das Blattgut 10 beispielhaft mit einem schematisch dargestellten Druckbild einer Banknote im sichtbaren Spekralbereich gezeigt. Das Blattgut 10 weist Merkmale auf, die im infraroten Spektralbereich undurchlässig sind. Hierzu zählen beispielsweise die Seriennummer 11, der Sicherheitsfaden 12 und das Druckbild 14. Weiterhin weist das Blattgut 10 Druckbilder 15 auf, die im sichtbaren Spektralbereich undurchlässig, aber im infraroten Spektralbereich transparent sind. Die Fig. 9 zeigt das Blattgut 10 mit dem entsprechenden Druckbild im infraroten Bereich.

Aus dem sichtbaren Druckbild können beispielsweise Kenndaten für die Form, d. h. die Länge bzw. die Breite, des Blattguts 10 oder dessen Fläche bestimmt werden. Auch Kenndaten für die Art und Transportlage des Blattguts können abgeleitet werden. Weiterhin können Kenndaten für die Übereinstimmung des Druckbilds sowohl im sichtbaren als auch im unsichtbaren Spektralbereich ermittelt werden.

In Fig. 10 wird das Blattgut 10 mit Flecken 16 und Einrissen 17 gezeigt. Hieraus werden Kenndaten für die Anzahl von Flecken 17 o. ä. Veränderungen im Druckbild durch einen Vergleich mit entsprechenden Vergleichsdaten auf Basis des sichtbaren Druckbilds ermittelt. Zudem lassen sich Kenndaten zur Form und zur Vollständigkeit des Blattguts 10 erstellen. Weiterhin können Kenndaten für die Anzahl von Einrissen 17 erstellt werden.

Zur Bestimmung von Kenndaten der Verschmutzung des Blattguts 10 lassen sich die in Fig. 11 dargestellten Freiflächen 18 im infraroten Druckbild verwenden. Da die Freiflächen 18 im Verhältniss zu den Freiflächen im sichtbaren Druckbild groß sind, ergeben sich relativ verläßliche Kenndaten für die Verschmutzung.

Wie oben ausgeführt, besteht ein weiterer Vorteil der Vorrichtung darin, daß sich aus den detektierten Daten eine relativ große Anzahl von Kenndaten ableiten lassen. Selbstverständlich kann der Fachmann bei Bedarf aus den detektierten Daten weitere Kenndaten ableiten, die hier nicht explizit beschrieben werden.

Vorzugsweise werden die ermittelten Kenndaten über eine Datenleitung 320 an eine übergeordnete Steuereinheit 70 übertragen. Diese entscheidet dann u. a. anhand der bei der Prüfung ermittelten Kenndaten, wie mit dem Blattgut 10 weiterverfahren werden soll. Bei Bedarf kann diese Entscheidung auch in der Auswerteeinrichtung 40 getroffen werden.

Wird die beschriebene Vorrichtung zur Prüfung von Blattgut beispielsweise in einer Banknotenverarbeitungsmaschine eingesetzt, so kann die Steuereinrichtung 70 das Blattgut 10 aufgrund der Kenndaten der Vorrichtung und/oder anderer Komponenten der Banknotenverarbeitungsmaschine in ein bestimmtes Ablagefach oder zur Vernichtung in einen Shredder oder in andere Komponenten der Banknotenverarbeitungsmaschine leiten.

## Patentansprüche

1. Vorrichtung zur Prüfung von Blattgut (10), das mit einer Transportgeschwindigkeit in eine Transportrichtung transportiert wird, mit
- einer Beleuchtungseinrichtung (20), die das Blattgut mit Licht beleuchtet,
- einer Empfangseinrichtung (30), die das vom Blattgut remittierte und/oder das durch das Blattgut transmittierte Licht empfängt und in entsprechende elektrische Signale umsetzt,
- einer Auswerteeinrichtung (40), die die Signale verarbeitet und zur Prüfung des Blattguts mit Referenzdaten vergleicht,
dadurch **gekennzeichnet,** daß
- die Beleuchtungseinrichtung (20) das Blattgut (10) gleichmäßig im gesamten zu untersuchenden Spektralbereich beleuchtet,
- die Empfangseinrichtung (30) wenigstens zwei linienförmige parallel zu einander angeordnete CCD-Arrays (Z.1 - Z.4) aufweist,
- die auf einem Träger (34) angebracht sind,
- jedes CCD-Array (Z.1 - Z.4) mit einem für einen bestimmten Spektralbereich durchlässigen Filter (F.1 - F.4) versehen ist, und
- daß mindestens ein Filter (F.1 - F.4) im sichtbaren und mindestens ein Filter (F.1 - F.4) im nichtsichtbaren Spektralbereich durchlässig ist.

2. Vorrichtung nach Anspruch 1, dadurch **gekennzeichnet** , daß die Empfangseinrichtung (30) vier CCD-Arrays (Z.1 - Z.4) mit Filtern (F.1 - F.4) aufweist, wobei die Filter (F.1 - F.4) jeweils Wellenlängen im Spektralbereich rot, grün, blau (RGB) und im infraroten Spektralbereich (IR) transmittieren.

3. Vorrichtung nach Anspruch 1, dadurch **gekennzeichnet** , daß die CCD-Arrays Bildelemente (33) mit sensitiven Flächen aufweisen, bei denen die Größe der sensitiven Flächen in Abhängigkeit von vorgegebenen Parametern optimiert ist.

4. Vorrichtung nach Anspruch 1, dadurch **gekennzeichnet** , daß die Beleuchtungseinrichtung (20) und die Empfangseinrichtung (30) in einer Achse senkrecht zum Blattgut angebracht sind.

5. Vorrichtung nach Anspruch 1, dadurch **gekennzeichnet** , daß die Empfangseinrichtung (30) eine optische Einrichtung (31) aufweist, die einen Beleuchtungsbereich mit einer bestimmten Breite (B) und Länge (L) auf die CCD-Arrays (Z.1 - Z.4) abbildet.

6. Vorrichtung nach Anspruch 5, dadurch **gekennzeichnet** , daß die Breite (B) des Beleuchtungsbereichs mindestens gleich der Breite des Blattgutes (10) ist.

7. Vorrichtung nach Anspruch 5, dadurch **gekennzeichnet** , daß der Beleuchtungsbereich gleichmäßig beleuchtet wird.

8. Vorrichtung nach Anspruch 7, dadurch **gekennzeichnet** , daß die Beleuchtungseinrichtung (20) mindestens einen Reflektor und zwei Lichtquellen (21, 22) innerhalb des Reflektors aufweist, wobei
- der Reflektor ein zylindrisches Spiegelsegment (23) mit einer bestimmten Breite (B) und einer Fokuslinie (F) in Richtung der Breite (B) des Spiegelsegments (23) aufweist,
- die Lichtquellen (21, 22) in der Fokuslinie (F) des Spiegelsegments (23) angebracht werden,
- die Form der Grundlinie des Spiegelsegments (23) so gewählt ist, daß das von den Lichtquellen (21, 22) emittierte Licht in Längsrichtung des Beleuchtungsbereichs gleichmäßig ist und
- der Reflektor zwei ebene innere Spiegel (24) innerhalb des Spiegelsegments (23) und zwei ebene äußere Spiegel (25) an den Enden des Spiegelsegments (23) aufweist, wobei die Spiegel (24, 25) senkrecht zur Fokuslinie F des Spiegelsegments (23) angeordnet sind und jeweils die Spiegelfläche eines inneren Spiegels (24) und eines äußeren Spiegels (25) auf eine der Lichtquellen (21, 22) weisen, so daß auch der Beleuchtungsbereich in Richtung der Breite gleichmäßig beleuchtet wird.

9. Vorrichtung nach Anspruch 8, dadurch **gekennzeichnet** , daß der Reflektor mittels eines Fensters (26) zwischen den inneren Spiegeln (24) und eines Fensters (27) an der dem Beleuchtungsbereich zugewandten Seite des Reflektors geschlossen ist.

10. Vorrichtung nach Anspruch 9, dadurch **gekennzeichnet** , daß mindestens eine der Fensterflächen entspiegelt ist.

11. Vorrichtung nach Anspruch 9, dadurch **gekennzeichnet** , daß ein Fenster als Filter für eine bestimmte Wellenlänge ausgebildet ist.

12. Vorrichtung nach Anspruch 9, dadurch **gekennzeichnet** , daß im Reflektor Blenden (28) vorgesehen sind, die eine Reflexion des von den Lichtquellen (21, 22) emittierten Lichts an dem dem Beleuchtungsbereich zugewandten Fenster (27) in die Empfangseinrichtung (30) verhindern.

13. Vorrichtung nach Anspruch 1, dadurch **gekennzeichnet** , daß die Beleuchtungseinrichtung (20) eine Gegenbeleuchtung (40) aufweist, die das Blattgut (10) in einem definierten Spektralbereich beleuchtet.

14. Vorrichtung nach Anspruch 13, dadurch **gekennzeichnet** , daß eine Beleuchtung des Blattguts im definierten Spektralbereich der Gegenbeleuchtung (40) durch andere Komponenten der Beleuchtungseinrichtung (20) mittels Filter (43) verhindert wird.

15. Vorrichtung nach Anspruch 13, dadurch **gekennzeichnet** , daß der definierte Spektralbereich im infraroten Spektralbereich liegt.

16. Vorrichtung nach Anspruch 13, dadurch **gekennzeichnet** , daß die Gegenbeleuchtung (40) als Lichtquelle ein Array (41) aus Leuchtdioden aufweist.

17. Vorrichtung nach Anspruch 13, dadurch **gekennzeichnet** , daß die Gegenbeleuchtung durch ein Fenster (42) geschlossen ist.

18. Vorrichtung nach Anspruch 17, dadurch **gekennzeichnet** , daß das Fenster (42) ein Filter ist.

19. Vorrichtung nach Anspruch 17, dadurch **gekennzeichnet** , daß das Fenster (42) entspiegelt ist.

20. Vorrichtung nach Anspruch 1, dadurch **gekennzeichnet** , daß die Auswerteeinrichtung (40) zwei Komponenten aufweist:
- eine Korrektureinheit (50), die die von der Empfangseinheit (30) übertragenen digitalen Daten normiert und/oder zusammenfaßt,
- eine Bildverarbeitungseinheit (60), die die von der Korrektureinheit übertragenen digitalen Daten zu einem zweidimensionalen Bild zusammensetzt und dieses Bild dann transformiert und/oder abspeichert und mit Referenzwerten vergleicht.

21. Vorrichtung nach Anspruch 20, dadurch **gekennzeichnet** , daß die Korrektureinheit (50) zur Ausführung der Berechnungen mindestens einen digitalen Signalprozessor aufweist.

22. Verfahren zur Prüfung von Blattgut, dadurch **gekennzeichnet**, daß
- das Blattgut mit einer Transportgeschwindigkeit in eine Transportrichtung transportiert wird
- das Blattgut (10) stetig und im gesamten zu untersuchenden Spektralbereich beleuchtet wird,
- das vom Blattgut remittierte und/oder durch das Blattgut transmittierte Licht (100) in mindestens einem sichtbaren und einem nichtsichtbaren Spektralbereich unter Verwendung mindestens zweier parallel zueinander angeordneter, auf einem Träger (34) angebrachter und mit entsprechenden Filtern versehener CCD-Arrays in digitale Signale umgewandelt wird, und
- die digitalen Signale verarbeitet und zur Prüfung des Blattguts mit Referenzdaten verglichen werden.

23. Verfahren nach Anspruch 22, dadurch **gekennzeichnet** , daß die digitalen Daten bei der Verarbeitung normiert und/oder zusammengefaßt werden.

24. Verfahren nach Anspruch 23, dadurch **gekennzeichnet** , daß die digitalen Daten bei der Verarbeitung auf eine Intensität normiert werden, die während der Prüfung kontinuierlich an einer Weißreferenz gemessen wird, um Änderungen aufgrund der Beleuchtungszeit auszuschließen.

25. Verfahren nach Anspruch 22, dadurch **gekennzeichnet** , daß die digitalen Daten bei der Verarbeitung zu einem zweidimensionalen Bild zusammengesetzt werden und dieses Bild dann transformiert und/oder abgespeichert wird.

26. Verfahren nach Anspruch 25, dadurch **gekennzeichnet** , daß bei der Verarbeitung eine Farbtransformation der digitalen Daten des zweidimensionalen Bilds mittels gespeicherter Tabellen durchgeführt wird.

27. Verfahren nach Anspruch 25, dadurch **gekennzeichnet** , daß bei der Verarbeitung aus den zweidimensionalen digitalen Daten die Art und Transportlage des Blattguts (10) bestimmt wird.

28. Verfahren nach Anspruch 25, dadurch **gekennzeichnet** , daß bei der Verarbeitung aus den zweidimensionalen digitalen Daten die Form und Vollständigkeit des Blattguts bestimmt wird.

29. Verfahren nach Anspruch 25, dadurch **gekennzeichnet** , daß bei der Verarbeitung aus den zweidimensionalen digitalen Daten die Verschmutzung des Blattguts bestimmt wird.

30. Verfahren nach Anspruch 25, dadurch **gekennzeichnet** , daß bei der Verarbeitung die zweidimensionalen digitalen Daten mit zweidimensionalen Vergleichsdaten verglichen werden und durch den Vergleich Flecken o. ä. Veränderungen erkannt werden.

## Claims

1. An apparatus for testing sheet material (10) transported at a transport speed in a transport direction, having
- an illumination device (20) which illuminates the sheet material with light,
- a receiving device (30) which receives light diffusely reflected by the sheet material and/or transmitted through the sheet material and converts it into corresponding electric signals,
- an evaluation device (40) which processes the signals and compares them with reference data for testing the sheet material,
characterized in that
- the illumination device (20) illuminates the sheet material (10) uniformly in the total spectral region to be tested,
- the receiving device (30) has at least two linear parallel CCD arrays (Z. 1 - Z.4)
- which are mounted on a carrier (34),
- each CCD array (Z.1 - Z.4) being provided with a filter (F.1 - F.4) transmitting a certain spectral region, and
- at least one filter (F. 1 - F.4) transmits in the visible spectral region and at least one filter (F. 1 - F.4) in the invisible spectral region.

2. The apparatus of claim 1, characterized in that the receiving device (30) has four CCD arrays (Z. 1 - Z.4) with filters (F. 1 - F.4), the filters (F. 1 - F.4) each transmitting wavelengths in the spectral region, red, green, blue (RGB), and in the infrared spectral region (IR).

3. The apparatus of claim 1, characterized in that the CCD arrays have picture elements (33) with sensitive surfaces, the size of the sensitive surfaces being optimized in accordance with given parameters.

4. The apparatus of claim 1, characterized in that the illumination device (20) and the receiving device (30) are mounted in an axis perpendicular to the sheet material.

5. The apparatus of claim 1, characterized in that the receiving device (30) has an optical device (31) which images an illumination area with a certain width (B) and length (L) onto the CCD arrays (Z.1 - Z.4).

6. The apparatus of claim 5, characterized in that the width (B) of the illumination area is at least equal to the width of the sheet material (10).

7. The apparatus of claim 5, characterized in that the illumination area is illuminated uniformly.

8. The apparatus of claim 7, characterized in that the illumination device (20) has at least one reflector and two light sources (21, 22) within the reflector,
- the reflector having a cylindrical mirror segment (23) with a certain width (B) and a focal line (F) in the direction of the width (B) of the mirror segment (23),
- the light sources (21, 22) being mounted in the focal line (F) of the mirror segment (23),
- the form of the base line of the mirror segment (23) being selected so that the light emitted by the light sources (21, 22) is uniform in the longitudinal direction of the illumination area, and
- the reflector having two plane inner mirrors (24) within the mirror segment (23) and two plane outer mirrors (25) at the ends of the mirror segment (23), the mirrors (24, 25) being disposed perpendicular to the focal line (F) of the mirror segment (23) and the mirror surface of an inner mirror (24) and an outer mirror (25) pointing to one of the light sources (21, 22) in each case so that the illumination area is also illuminated uniformly in the direction of the width.

9. The apparatus of claim 8, characterized in that the reflector is closed by means of a window (26) between the inner mirrors (24) and a window (27) on the side of the reflector facing the illumination area.

10. The apparatus of claim 9, characterized in that at least one of the window surfaces is bloomed.

11. The apparatus of claim 9, characterized in that a window is formed as a filter for a certain wavelength.

12. The apparatus of claim 9, characterized in that screens (28) are provided in the reflector which prevent reflection of the light emitted by the light sources (21, 22) on the window (27) facing the illumination area into the receiving device (30).

13. The apparatus of claim 1, characterized in that the illumination device (20) has a back illumination device (40) which illuminates the sheet material (10) in a defined spectral region.

14. The apparatus of claim 13, characterized in that illumination of the sheet material in the defined spectral region of the back illumination device (40) by other components of the illumination device (20) is prevented by means of filters (43).

15. The apparatus of claim 13, characterized in that the defined spectral region is in the infrared spectral region.

16. The apparatus of claim 13, characterized in that the back illumination device (40) has an array (41) of light-emitting diodes as a light source.

17. The apparatus of claim 13, characterized in that the back illumination device is closed by a window (42).

18. The apparatus of claim 17, characterized in that the window (42) is a filter.

19. The apparatus of claim 17, characterized in that the window (42) is bloomed.

20. The apparatus of claim 1, characterized in that the evaluation device (40) has two components:
- a correction unit (50) which standardizes and/or combines the digital data transferred by the receiving unit (30),
- an image processing unit (60) which assembles the digital data transferred by the correction unit into a two-dimensional image and then transforms and/or stores this image and compares it with reference values.

21. The apparatus of claim 20, characterized in that the correction unit (50) has at least one digital signal processor for performing the calculations.

22. A method for testing sheet material, characterized in that
- the sheet material is transported at a transport speed in a transport direction,
- the sheet material (10) is illuminated continually and in the total spectral region to be tested,
- light (100) diffusely reflected by the sheet material and/or transmitted through the sheet material in at least a visible and an invisible spectral region is converted into digital signals using at least two parallel CCD arrays mounted on a carrier (34) and provided with corresponding filters, and
- the digital signals are processed and compared with reference data for testing the sheet material.

23. The method of claim 22, characterized in that the digital data are standardized and/or combined during processing.

24. The method of claim 23, characterized in that the digital data are standardized during processing to an intensity which is measured continuously by a white reference during testing in order to exclude changes due to illumination time.

25. The method of claim 22, characterized in that the digital data are assembled into a two-dimensional image during processing and this image then transformed and/or stored.

26. The method of claim 25, characterized in that a color transformation of the digital data of the two-dimensional image is performed by means of stored tables during processing.

27. The method of claim 25, characterized in that the type and transport position of the sheet material (10) is determined from the two-dimensional digital data during processing.

28. The method of claim 25, characterized in that the form and completeness of the sheet material is determined from the two-dimensional digital data during processing.

29. The method of claim 25, characterized in that the soiling of the sheet material is determined from the two-dimensional digital data during processing.

30. The method of claim 25, characterized in that the two-dimensional digital data are compared with two-dimensional reference data during processing and stains or similar changes are recognized through the comparison.

## Revendications

1. Dispositif pour contrôler un objet (10) sous forme de feuille, qui est transporté avec une vitesse de transport dans une direction de transport, comprenant :
- un organe d'éclairage (20) qui éclaire l'objet sous forme de feuille avec de la lumière,
- un organe de réception (30) qui réémet la lumière transmise à travers l'objet sous forme de feuille et/ou reçoit la lumière transmise à travers l'objet sous forme de feuille et la transforme en signaux électriques correspondants,
- un organe d'évaluation (40) qui traite les signaux et les compare à des données de référence pour contrôler l'objet sous forme de feuille,
caractérisé en ce que :
- l'organe d'éclairage (20) éclaire l'objet (10) sous forme de feuille régulièrement et sur la totalité de la zone spectrale à étudier ;
- l'organe de réception (30) comporte au moins deux rangées d'éléments photosensibles à transfert de charge CCD (Z.1 à Z.4) disposés sous forme de deux lignes parallèles l'une à l'autre,
- qui sont disposées sur un support (34),
- chaque rangée d'éléments photosensibles à transfert de charge CCD (Z.1 à Z.4) étant munie d'un filtre (F.1 à F.4) transparent pour une zone spectrale déterminée, et
- en ce qu'au moins un filtre (F.1 à F.4) est transparent dans une zone visible et au moins un filtre (F.1 à F.4) est transparent dans une zone spectrale non visible.

2. Dispositif selon la revendication 1, caractérisé en ce que l'organe de réception (30) comporte quatre rangées d'éléments photosensibles à transfert de charge CCD (Z.1 à Z.4) avec les filtres (F.1 à F.4) transmettant chacun des longueurs d'onde dans la zone spectrale rouge, verte, bleue (RGB) et dans la zone spectrale des infrarouges (IR).

3. Dispositif selon la revendication 1, caractérisé en ce que les rangées d'éléments photosensibles à transfert de charge CCD comporte des éléments d'image (33) à surfaces sensibles, dans lesquels la taille des surfaces sensibles est optimisée en fonction de paramètres prédéterminés.

4. Dispositif selon la revendication 1, caractérisé en ce que l'organe d'éclairage (20) et l'organe de réception (30) sont disposés sur un axe perpendiculaire à l'objet sous forme de feuille.

5. Dispositif selon la revendication 1, caractérisé en ce que l'organe de réception (30) comporte un organe optique (31) qui forme sur les rangées d'éléments photosensibles à transfert de charge CCD (Z.1 à Z.4) l'image d'une zone éclairée présentant une largeur (B) et une longueur (L) déterminées .

6. Dispositif selon la revendication 5, caractérisé en ce que la largeur (B) de la zone éclairée est au moins égale à la largeur de l'objet (10) sous forme de feuille.

7. Dispositif selon la revendication 5, caractérisé en ce que la zone éclairée est éclairée régulièrement.

8. Dispositif selon la revendication 7, caractérisé en ce que l'organe d'éclairage (20) comporte au moins un réflecteur et deux sources de lumière (21, 22) à l'intérieur du réflecteur, tandis que :
- le réflecteur comporte un segment de miroir cylindrique (23) qui présente une largeur déterminée (B) et une ligne de focalisation (F) dans la direction de la largeur (B) du segment de miroir (23);
- les sources de lumière (21, 22) sont placées sur la ligne de focalisation (F) du segment de miroir (23);
- la forme de la ligne de base du segment de miroir (23) est choisie de telle façon que la lumière émise par les sources de lumière (21, 22) soit régulière dans la direction longitudinale de la zone d'éclairage ; et
- le réflecteur comporte deux miroirs intérieurs plans (24) à l'intérieur du segment de miroir (23), et deux miroirs extérieurs plans (25) aux extrémités du segment de miroir (23), les miroirs (24, 25) étant disposés perpendiculairement à la ligne de focalisation (F) du segment de miroir (23), et chacune des surfaces de miroir d'un miroir intérieur (24) et d'un miroir extérieur (25) étant tournée vers l'une des sources de lumière (21, 22), de telle façon qu'également la zone éclairée dans la direction de la largeur soit éclairée régulièrement.

9. Dispositif selon la revendication 8, caractérisé en ce que le réflecteur est fermé par une fenêtre (26) entre le miroir intérieur (24) et une fenêtre (27) du côté du réflecteur tourné vers la zone éclairée.

10. Dispositif selon la revendication 9, caractérisé en ce qu'au moins l'une des surfaces de fenêtre est anti-reflet.

11. Dispositif selon la revendication 9, caractérisé en ce qu'une fenêtre est réalisée sous la forme d'un filtre pour une longueur d'onde déterminée.

12. Dispositif selon la revendication 9, caractérisé en ce que sont prévus dans le réflecteur des diaphragmes (28) qui empêchent une réflexion de la lumière émise par les sources de lumière (21, 22) sur la fenêtre (27) tournée vers la zone éclairée dans l'organe de réception (30).

13. Dispositif selon la revendication 1, caractérisé en ce que l'organe d'éclairage (20) comporte une contre-lumière (40) qui éclaire l'objet (10) sous forme de feuille dans une zone spectrale définie.

14. Dispositif selon la revendication 13, caractérisé en ce qu'un éclairage de l'objet sous forme de feuille dans une zone spectrale définie du contre-éclairage (40) par d'autres composantes de l'organe d'éclairage (20), est empêché par des filtres (43).

15. Dispositif selon la revendication 13, caractérisé en ce que la zone spectrale définie se trouve dans la zone spectrale infrarouge.

16. Dispositif selon la revendication 13, caractérisé en ce que le contre-éclairage (40) comporte comme source de lumière une rangée (41) de diodes luminescentes.

17. Dispositif selon la revendication 13, caractérisé en ce que le contre-éclairage est fermé par une fenêtre (42).

18. Dispositif selon la revendication 17, caractérisé en ce que la fenêtre (42) est constituée par un filtre.

19. Dispositif selon la revendication 17, caractérisé en ce que la fenêtre (42) est anti-reflet.

20. Dispositif selon la revendication 1, caractérisé en ce que l'organe d'évaluation (40) comporte deux composantes :
- une unité de correction (50) qui normalise et/ou rassemble les données numériques transmises par l'unité de réception (30) ;
- une unité de traitement d'image (60) qui assemble les données numériques transmises par l'unité de correction en une image bidimensionnelle, et ensuite transforme et/ou mémorise cette image et la compare avec des valeurs de référence.

21. Dispositif selon la revendication 20, caractérisé en ce que l'unité de correction (50) comporte pour réaliser les calculs au moins un processeur numérique de signaux.

22. Procédé pour contrôler un objet sous forme de feuille, caractérisé en ce que :
- l'objet en feuille est transporté à une vitesse de transport dans une direction de transport ;
- l'objet (10) sous forme de feuille est éclairé en permanence et dans la totalité de la zone spectrale à contrôler ;
- la lumière réémise par l'objet sous forme de feuille et/ou la lumière (100) transmise par l'objet sous forme de feuille, est transformée en signaux numériques dans au moins une zone spectrale visible et une zone spectrale non visible, en utilisant au moins deux rangées d'éléments photosensibles à transfert de charge CCD disposées parallèlement l'une à l'autre, montées sur un support (34) et munies de filtres correspondants, et en ce que les signaux numériques sont traités et sont comparés à des données de référence pour contrôler l'objet en forme de feuille.

23. Procédé selon la revendication 22, caractérisé en ce que les données numériques sont normalisées et/ou assemblées au cours du traitement.

24. Procédé selon la revendication 23, caractérisé en ce que les données numériques, au cours du traitement, sont normalisées à une intensité qui, pendant le contrôle, est mesurée en permanence par rapport à une référence de blanc afin d'exclure les variations dues à la durée d'éclairement.

25. Procédé selon la revendication 22, caractérisé en ce que les données numériques sont rassemblées au cours du traitement en une image bidimensionnelle et cette image est ensuite transformée et/ou mémorisée.

26. Procédé selon la revendication 25, caractérisé en ce que, au cours du traitement, est réalisée une transformation des données numériques relatives à la couleur de l'image bidimensionnelle au moyen de tables mises en mémoire.

27. Procédé selon la revendication 25, caractérisé en ce que, au cours du traitement, on détermine à partir des données numériques bidimensionnelles le genre et la position de transfert de l'objet (10) sous forme de feuille.

28. Procédé selon la revendication 25, caractérisé en ce que, au cours du traitement, on détermine, à partir des données numériques bidimensionnelles, la forme et l'intégralité de l'objet sous forme de feuille.

29. Procédé selon la revendication 25, caractérisé en ce que, au cours du traitement, on détermine à partir des données numériques bidimensionnelles, le degré de salissure de l'objet sous forme de feuille.

30. Procédé selon la revendication 25, caractérisé en ce que, au cours du traitement, on compare les données numériques bidimensionnelles avec les données bidimensionnelles de comparaison, et on reconnaît par la comparaison les taches ou d'autres modifications.
